## Europäisches Patentamt
## European Patent Office
## Office européen des brevets

(11) Numéro de publication: **0 030 029**
**B1**

# FASCICULE DE BREVET EUROPEEN

(45) Date de publication du fascicule du brevet: **29.05.85**

(21) Numéro de dépôt: **80107497.2**

(22) Date de dépôt: **01.12.80**

(51) Int. Cl.⁴: **B 61 D 45/00,** B 61 D 3/16, B 60 P 7/08 ·

(54) **Dispositif de calage de charge, notamment pour wagons transport de véhicules.**

(30) Priorité: **03.12.79 FR 7929669**

(43) Date de publication de la demande: **10.06.81 Bulletin 81/23**

(45) Mention de la délivrance du brevet: **29.05.85 Bulletin 85/22**

(84) Etats contractants désignés: **BE DE IT LU NL**

(56) Documents cités:
**DE-A-1 455 315**
**FR-A-1 381 055**
**FR-A-1 510 029**
**FR-A-2 125 931**
**FR-A-2 421 768**
**FR-A-2 450 177**
**FR-E- 79 785**
**GB-A- 703 585**

(73) Titulaire: **Planchard, Jean-Michel**
**24, rue du Rocher**
**F-75008 Paris (FR)**

(73) Titulaire: **SOCIETE LORRAINE DE MATERIEL FERROVIAIRE Société anonyme dite:**
**La Houve-siège 1 B.P. no. 71**
**F-57150 Creutzwald (FR)**

(72) Inventeur: **Planchard, Jean-Michel**
**24, rue du Rocher**
**F-75008 Paris (FR)**

(74) Mandataire: **Casalonga, Axel et al**
**BUREAU D.A. CASALONGA OFFICE JOSSE & PETIT Baaderstrasse 12-14**
**D-8000 München 5 (DE)**

Courier Press, Leamington Spa, England.

## Description

La présente invention a pour objet un dispositif de calage de véhicules sur des planchers, notamment sur du matériel ferroviaire de transport de véhicules comprenant une semelle pourvue sur sa face en contact avec le plancher de moyens en saillie destinés à s'engager dans une structure en creux du plancher et un corps de sabot pourvu à l'avant d'une zone de calage conformée pour venir en contact avec une roue du véhicule à caler, ladite semelle et ledit corps de sabot comportant des moyens pour le maintien et le guidage longitudinal du corps de sabot sur la semelle et des moyens pour le verrouillage du corps de sabot en position de calage sur la semelle.

En dehors des dispositifs de calage "fixes" comprenant un sabot immobilisé directement par rapport au plancher et n'admettant donc ni positionnement précis longitudinal et transversal, ni réglage de pression par rapport à la roue à caler, on connaît (DE—A—1 455 315) un dispositif de calage réglable tel que défini ci-dessus, avec un corps de sabot déplaçable longitudinalement sur une semelle accrochée au plancher. Sur ce dispositif connu, les moyens de verrouillage du corps de sabot par rapport à la semelle comprennent une crémaillère et un cliquet à ressort, ou des moyens équivalents à friction. Ces moyens de verrouillage, meme s'ils paraissent simples, augmentent sensiblement le prix de revient du dispositif de calage et surtout réduisent la fiabilité du dispositif. De plus, sur certains modèles de voitures, l'enlèvement de ce dispositif de calage connu peut présenter des difficultés.

La présente invention a pour objet un dispositif de calage réglable, du type défini ci-dessus, conçu de manière à non seulement réunir tous les advantages des dispositifs de calage "fixe" (simplicité robustesse, faible prix de revient) et ceux du dispositif de calage réglable (calage sans jeu, simplicité de la mise en place) sans en présenter les inconvenients, mais encore d'offrir des avantages supplémentaires concernant la simplicité de l'enlèvement du dispositif de calage et la possibilité d'utilisation du dispositif pour tous les modèles de véhicules.

Sur le dispositif de calage conforme à l'invention, les moyens pour le verrouillage du corps de sabot en position de calage sur la semelle comprennent une languette transversale faisant saillie de façon oblique vers la bas et vers l'arrière sur le corps de sabot et plusieurs lumières transversales ménagées les unes derrière les autres dans la semelle. Les moyens de maintien du corps de sabot sur la semelle comprennent un axe transversal fixé à la semelle de manière que ses extrémités coopérent avec le corps de sabot dans le sens d'un maintien avec jeu du corps de sabot sur la semelle. Les moyens en saillie sur la semelle pour s'engager dans une structure en creux du plancher comprennent deux tenons prévus côte à côte sur la partie arrière de la semelle.

Le dispositif de calage conforme à l'invention, tout en étant composé de deux parties mobiles l'une par rapport à l'autre et verrouillables l'une par rapport à l'autre, est dépourvu de tout mécanisme couteux, sujet à des défaillance, et est utilisable pour tous les modèles de véhicules, du fait que pour l'enlèvement du dispositif de calage, il suffit de soulever la partie arrière la plus accessible de ce dispositif, à l'aide d'un levier du type pied-de-biche, pour dégager les tensons arrière du plancher, ce qui libère le dispositif dans son ensemble.

De préférence, le corps de sabot présente un profil transversal en U, chaque aile faisant saillie vers le haut comportant une ouverture, chaque extrémité dudit axe transversal fixée à la semelle coopérant dans le sens d'un maintien avec jeu avec le bord inférieur de l'une desdites ouvertures.

En vue du guidage longitudinal du corps de sabot sur la semelle, il est avantageux qu'en coupe transversale, l'âme du profil en U du corps de sabot présente un bossage femelle et la semelle présente un bossage male correspondant.

Suivant un mode de réalisation préféré des moyens de maintien du corps de sabot sur la semelle, un étrier est fixé à la face inférieure du bossage mâle de la semelle, le corps de sabot présente deux lumières pour le passage des deux branches de cet étrier et l'axe transversal est immoblisé à l'aide d'une untretoise tubulaire et d'une goupille entre les branches de l'étrier, au-dessus de l'âme du profil en U du corps de sabot.

Afin d'éviter, en cas de choc violent, que la roue saute par-dessus le dispositif de calage, il est avantageux que la zone de calage présente une partie supérieure en relief par rapport à la face d'appui. En cas de choc violent, cette partie en relief s'imprime dans le pneu et freine ainsi une rotation intempestive de ce dernier.

De préférence, le languette de verrouillage est prévue à la partie arrière du corps de sabot et le bord inférieure de l'ouverture prévue dans chaque aile du profil en U du corps de sabot est légèrement inclinée vers le bas de l'avant vers l'arrière.

L'invention sera mieux comprise à la lecture de la description non limitative suivie de deux formes de réalisation de dispositif de calage, en référence au dessin annexé sur lequel:

— la figure 1 est une vue latérale d'une forme de réalisation du sabot de calage selon l'invention;
— la figure 2 est une vue par l'arrière du sabot de la figure 1;
— la figure 3 est une coupe transversale au niveau d'articulation du corps de sabot à la semelle;

— la figure 4 est une vue plane de la semelle de sabot; et,

— la figure 5 est une vue latérale d'une autre forme de réalisation de sabot de calage selon l'invention.

Le corps de sabot 4 en forme de U embouti présente une tôle d'appui frontale 5 soudée sur chaque bord tombé des deux ailes de l'U, il est muni d'une poignée 6. Ce corps de sabot 4 comporte sur la base de l'U un bossage femelle 10 lui permettant de coulisser et de se guider sur le bossage mâle 11 de la semelle 1 et entre les renforts 1A—1B. L'appui frontal possédant un léger pli dans ses extrémités ceci évite le glissement éventuel du pneumatique.

Pour éviter une désolidarisation du corps 4 de la semelle 1, il est prévu un axe 7 immobilisé transversalement par une entretoise tubulaire 8 qui est, avec l'axe 7, traversée par une goupille 9.

Cet axe et entretoise libres en rotation passent dans un étrier 3 qui est soudé à l'intérieur du bossage 11 de la semelle 1.

La semelle 1 emboutie pourvue de renforts latéraux 1A—1B—1C présente une zone antérieure avec un bossage mâle 11. Dans ce bossage central sont prévues deux lumières longitudinales 12A et 12B pour le passage des deux branches 3A—3B, respectivement, de l'étrier 3 dont la base est solidarisée par soudure à ladite zone.

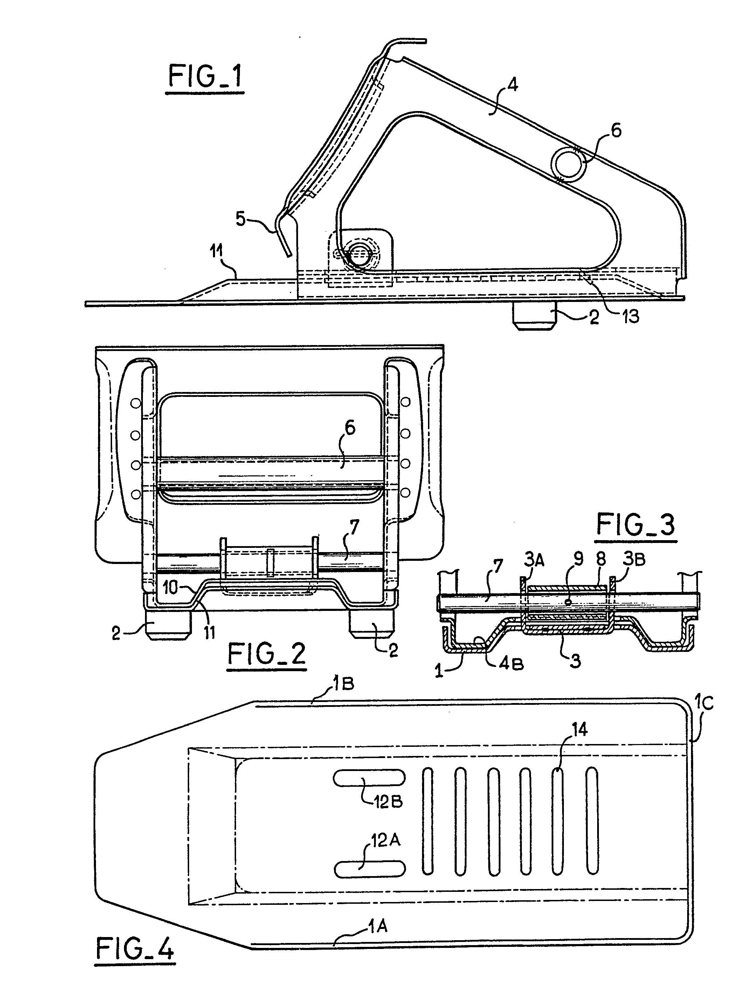

Cette dernière présente également un certain nombre de lumières transversale 14, dans le cas présent six, dans la forme de réalisation de semelle (fig. 4) pour le passage de la languette 13 prévue sur la zone basale 4B du corps de sabot 4.

Sur la face inférieure des zones latérales de la semelle sont solidarisés, par exemple par soudure, deux tétons 2 servant à l'immobilisation transversale du sabot dans le cas de l'utilisation du plancher décrit dans FR—A—2 450 177 dépose le 27 Février 1979 ainsi que dans les planchers de type caillebotis.

Le dispositif de calage est utilisable de la façon suivante:

Avant introduction de la cale de type sabot, il faut prendre soin de mettre le sabot 4 dans la position la plus arrière de la semelle 1.

On introduit la face avant de la semelle 1 au contact du pneumatique de façon que les tétons 2 se trouvent dans les logements ou les rainures des ondes du plancher—la cale étant de ce fait immobilisée on pousse vers le pneumatique, avec le pied ou les mains le sabot 4 jusqu'à ce que l'appui frontal 5 vienne légèrement comprimer le pneumatique et que la languette 13 vienne tomber dans la lumière 14 correspondante.

La languette 13 formant un angle et pénétrant dans la lumière transversale 14 de la semelle 1, on obtient avec la pression des pneumatiques un verrouillage permanent.

Le désengagement de tétons 2 de leurs logement ou rainures d'ondes se fait au moyen d'un levier du genre pied de biche prenant appui sur le plancher du wagon.

La distance entre les tétons 2 est avantageusement choisie pour coopérer avec tous les types de plancher de wagons actuellement connus, mais plus particulièrement avec les logements prévus dans les planchers selon FR—A—2 450 177.

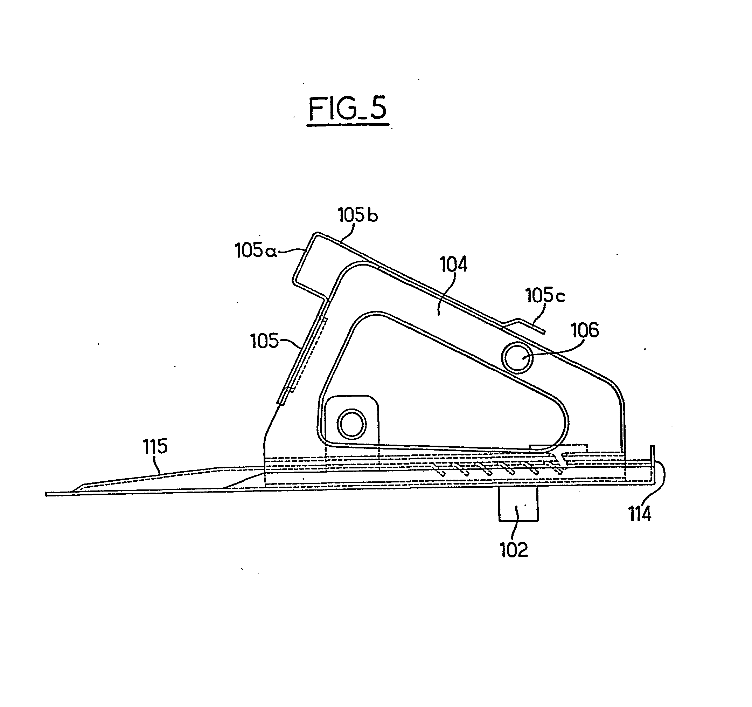

Dans la forme de réalisation de la figure 5, la tôle d'appui frontale 105 présente une saillie venue de formage 105a au voisinage du bord supérieur du sabot et se prolonge sur la face supérieure arrière du sabot par une structure de raidissement 105b qui se termine par une épaulement 105c pour l'acrochement des cales lors de leur dégagement des surfaces de roulement où elles sont temporairement fixées.

A l'extrémité arrière de la semelle de cale est prévu un renforcement 114 destiné à supporter les contraintes de flexion lors du dégagement des cales des surfaces de roulement, tandis que l'extrémité avant 115 de ladite semelle est biseautée de façon appropriée, pour s'engager sous la roue à caler.

Cette cale améliorée comporte également des tétons 102, une poignée 106 pour le corps de sabot 104.

Le sabot universel de calage selon l'invention s'adapte aux pneus de différentes largeurs ainsi qu'aux pneus jumelés, ce que les cales actuellement connues ne peuvent pas faire.

**Revendications**

1. Dispositif de calage de véhicules sur des planchers, notamment sur du matériel ferroviaire de transport de véhicules, comprenant une semelle (1) pourvue sur sa face en contact avec le plancher de moyens (2) en saillie destinés à s'engager dans une structure en creux du plancher, et une corps de sabot (4) pourvu à l'avant d'une zone de calage (5) conformée pour venir en contact avec une roue du véhicule à caler, ladite semelle (1) et ledit corps de sabot (4) comportant des moyens (3, 7, 8, 9, 10, 11) pour le maintien et le guidage longitudinal du corps de sabot (4) sur la semelle (1) et des moyens (13, 14) pour le verrouillage du corps de sabot (4) en position de calage sur la semelle (1), caractérisé par le fait que lesdits moyens de verrouillage comprennent une languette transversale (13) faisant saillie de façon oblique vers le bas et vers l'arrière sur le corps de sabot (4) et plusieurs lumières transversales (14) ménagées les unes derrière les autres dans la semelle (1) et que lesdits moyens de maintien comprennent un axe transversal (7) fixé à la semelle (1) de manière que ses extrémités coopérant avec le corps de sabot (4) dans le sens d'un maintien avec jeu du corps de sabot sur la semelle, et que lesdits moyens en saillie sur la semelle pour s'engager dans une structure en creux du plancher comprennent deux tenons (2) prévus côte à côte sur la partié arrière de la semelle (1).

2. Dispositif suivant la revendication 1, caractérisé par le fait que le corps de sabot (4) présente un profil transversal en U, chaque aile faisant saillie vers le haut comportant une ouverture, chaque extrémité dudit axe (7) coopérant dans le sens d'un maintien avec jeu avec le bord inférieur de l'une desdites ouvertures.

3. Dispositif suivant la revendication 2, caractérisé par le fait qu'en coupe transversale, l'âme du profil en U du corps de sabot (4) présente un bossage femelle (10) et la semelle (1) présente un bossage mâle (11) correspondant.

4. Dispositif suivant la revendication 3, caractérisé par le fait qu'il comprend un étrier (3) fixé à la face inférieure dudit bossage (11) de la semelle (1), que le corps de sabot (4) présente deux lumières (12A, 12B) pour le passage des deux branches (3A, 3B) dudit étrier et que ledit axe (7) est immobilisé à l'aide d'une entretoise tubulaire (8) et d'une goupille (9) entre les branches de l'étrier (3), au-dessus de l'âme du profil en U du corps de sabot (4).

5. Dispositif suivant la revendication 1, caractérisé par le fait que la zone de calage présente une partie supérieure (105a) en relief par rapport à la face d'appui (105).

6. Dispositif suivant l'une quelconque des revendications 2 à 5, caractérisé par le fait que ladite languette de verrouillage (13) est prévue à la partie arrière du corps de sabot (4, 104) et que le bord inférieur de l'ouverture prévue dans chaque aile du profil en U du corps de sabot (4, 104) est légèrement incliné vers le bas de l'avant vers l'arrière.

## Patentansprüche

1. Vorrichtung zum Verkeilen von Fahrzeugen auf Ladefläche, insbesondere auf zum Fahrzeugtransport bestimmtem rollendem Material der Eisenbahn, mit einer Auflageplatte (1), die auf der Berührungsfläche mit der Ladefläche mit vorspringenden Mitteln (2) versehen ist, die in eine mit Ausnehmungen versehene Struktur der Ladefläche eingreifen, und mit einem Schuhkörper (4), der vorne einen zur Berührung mit einem Rad des zu verkeilenden Fahrzeugs ausgebildeten Verkeilbereich (5) besitzt, wobei die genannte Auflageplatte (1 und der genannte Schuhkörper (4) Mittel (3, 7, 8, 9, 10, 11) zum Festhalten und zur Längsführung des Schuhkörpers (4) auf der Auflageplatte (1) sowie Mittel (13, 14) zur Verriegelung des Schuhkörpers (4) in Verkeilstellung auf der Auflageplatte (1) umfassen, dadurch gekennzeichnet, daß die genannten Verriegelungsmittel eine querliegende, schräg nach unten und hinten auf dem Schuhkörper (4) vorstehende Zunge (13) sowie mehrere querliegende, hintereinander in der Auflageplatte (1) angebrachte Schlitze (14) enthalten, und daß die genannten Haltemittel einen querliegenden Bolzen (7) enthalten, der so an der Auflageplatte (1) befestigt ist, daß seine Enden mit dem Schuhkörper (4) zusammenwirken, um den Schuhkörper (4) mit Spiel auf der Auflageplatte (1) festzuhalten, und daß die genannten über die Auflageplatte (1) vorspringenden Mittel zwecks Eingriff in eine mit Ausnehmungen versehene Struktur der Ladefläche zwei Zapfen (2) enthalten, die nebeneinander auf dem hinteren Teil der Auflageplatte (1) vorgesehen sind.

2. Vorrichtung gemäß Anspruch 1, dadurch gekennzeichnet daß der Schumkörper (4) ein U-förmiges Querprofil aufweist, wobei die beiden nach oben vorstehenden Schenkel je eine Öffnung enthalten und die beiden Enden des genannten Bolzens (7) jeweils mit dem unteren Rand einer der genannten Öffnungen im Sinne des Festhaltens mit Spiel zusammenwirken.

3. Vorrichtung gemäß Anspruch 2, dadurch gekennzeichnet, daß der Steg des U-Profils des Schuhkörpers (4) im Querschnitt einen nach innen vorpringen Buckel (10) und die Auflageplatte (1) einen entsprechenden nach außen vorspringenden Buckel (11) aufweist.

4. Vorrichtung gemäß Anspruch 3, dadurch gekennzeichnet, daß sie einen an der unteren Fläche des genannten Buckels (11) der Auflageplatte (1) befestigten Bügel (3) enthält, daß der Schuhkörper (4) zwei Schlitze (12A, 12B), zum Durchstecken der zwei Schenkel (3A, 3B) des genannten Bügels enthält, und daß der genannte Bolzen (7) mit Hilfe einer Abstandshülse (8) und eines Splintes (9) zwischen den Schenkeln des Bügels (3) über dem Steg des U-Profils des Schuhkörpers (4) festgehalten wird.

5. Vorrichtung gemäß Anspruch 1, dadurch gekennzeichnet, daß der Verkeilbereich einen oberen Teil (105a) aufweist, der gegenüber der Anlagefläche (105) erhaben ist.

6. Vorrichtung gemäß einem beliebigen der Ansprüche 2 bis 5, dadurch gekennzeichnet, daß die genannte Verriegelungszunge (13) am hinteren Teil des Schuhkörpers (4, 104) vorgesehen ist, und daß der untere Rand der in beiden Schenkeln des U-Profils des Schuhkörpers (4, 104) vorgesehenen Öffnungen von vorn nach hinten leicht schräg nach unten verläuft.

## Claims

1. A device for chocking vehicles on floorboards, notably on rail stock for the transport of vehicles, including a base plate (1) provided on its side in contact with the floorboard with projections (2) intended to engage into a recessed structure of the floorboard and a scotch body (4) provided in front with a wedging zone (5) shaped to fit against the wheel of a vehicle to be chocked, said plate (1) and said scotch body (4) including means (3, 7, 8, 9, 10, 11) for the retention and longitudinal guidance of the scotch body (4) on the base plate (1) and means (13, 14) for locking the scotch body (4) in chocking position on the base plate (1), characterized in that said locking means include a transversal tongue (13) projecting obliquely downward and backward from the scotch body (4) and a number of transversal slots (14) arranged one behind the other in the base plate (1), and that the said means of retention include a transverse stud (7) secured to the base plate (1) in such a manner that its ends cooperate with the scotch body (4) for loosely retaining the scotch body on the base plate, and that said projections on the base plate for engaging into a recessed structure in the floorboards comprise two lugs (2) provided one on each side of the rear part of the base plate (1).

2. The device according to claim 1, characterized in that the scotch body (4) has a channel shaped cross-section, each upwardly projecting flange having an opening, each end of the said stud (7) cooperating for loosely retention with the lower edge of one of the said openings.

3. The device according to claim 2, characterized in that in transverse section, the web of the channel shaped cross-section of the scotch body (4) has a female boss (10) and the plate base (1) has a corresponding male boss (11).

4. The device according to claim 3, characterized in that it includes a brace (3) secured to the underside of the said boss (11) of the base plate (1), that the scotch body (4) has two slots (12A, 12B) through which pass the two legs (3A, 3B) of the said brace (3) and that the said stud (7) is immobilized, with the aid of a tubular spacer (8) and a pin (9), between the legs of the brace (3), above the web of the channel shaped cross-section of the scotch body (4).

5. The device according to claim 1, characterized in that the wedging zone has an upper part (105a) projecting from the pressure face (105).

6. The device according to any one of claims 2 to 5, characterized in that the said locking tongue (13) is provided at the rear part of the scotch-body (4, 104) and the lower edge of the opening in each flange of the channel shaped cross-section of the scotch-body (4, 104) is slightly inclined downwardly from the front to rear.

0 030 029

FIG_1

FIG_3

FIG_2

FIG_4

# FIG_5